# EUROPÄISCHE PATENTANMELDUNG

(11) **EP 2 869 012 A1**
(43) Veröffentlichungstag der Anmeldung: **06.05.2015**
(21) Anmeldenummer: 13005992.6
(22) Anmeldetag: 20.12.2013
(51) Int. Cl.: F27B 7/20, C22B 7/00, C22B 21/00, F27B 7/34, F27B 7/36, F27B 7/42

(54) **Verfahren zum Betreiben eines Drehtrommelofens**

(30) Priorität: 29.10.2013 DE 102013017943
(71) Anmelder: Linde Aktiengesellschaft, 80331 München (DE)
(72) Erfinder: Niehoff, Thomas, 85229 Markt Indersdorf (DE)
(74) Vertreter: Kasseckert, Rainer

(57) **Zusammenfassung**

Die vorliegende Erfindung betrifft ein Verfahren zum Betreiben eines Drehtrommelofens (100) sowie einen entsprechenden Drehtrommelofen (100), wobei der Drehtrommelofen (100) mittels eines ersten (110) und eines zweiten (120) Brenners beheizt wird, wobei der erste Brenner (110) in einer Tür (101) des Drehtrommelofens (100) angeordnet ist und der zweite Brenner (120) an einer der Tür (101) gegenüber liegenden Seite (102a) des Drehtrommelofens (100) angeordnet ist, wobei eine erste Brennerleistung und eine zweite Brennerleistung, mit welcher der erste (110) bzw. der zweite (120) Brenner betrieben werden, in Abhängigkeit voneinander eingestellt werden.

## Beschreibung

Die Erfindung betrifft ein Verfahren zum Betreiben eines Drehtrommelofens sowie einen entsprechenden Drehtrommelofen, wobei der Drehtrommelofen mittels eines ersten und eines zweiten Brenners beheizt wird und wobei der erste Brenner in einer Tur des Drehtrommelofens angeordnet ist und der zweite Brenner an einer der Tur gegenüber liegenden Seite des Drehtrommelofens angeordnet ist.

### Stand der Technik

Kleinstückeliger Metalischrott, insbesondere Aluminiumschrott wie beispielsweise Aluminiumspäne, aber auch Dosen- und Folienschrott, weisen im allgemeinen organische Verunreinigungen in Form von Schneidmitteln, Ölen, Lacken, Kunststoffen und dgl auf Einschmelzen von derartigem kontaminiertem Metall erfolgt heute vor allem in Drehtrommelofen. Mittels derartiger Drehtrommelöfen wird eine Schmelzraffination bzw. eine Aufarbeitung des kontaminierten Metalls ermöglicht Um die hierfür notwendigen Temperaturen zu erzeugen, wird der betreffende Drehtrommelofen über einen Brenner von innen beheizt, wobei eine gleichformige Trommeldrehung zur Umschichtung und Mischung des in den Drehtrommelofen eingebrachten und zu schmelzenden Materials sorgt.

Derartige Drehtrommelöfen weisen zumeist einen Brenner, der entweder in einer Tür des Drehtrommelofens angebracht ist oder an einer der Tür gegenuberliegenden Seite des Drehtrommelofens. Mit zunehmender Größe des Drehtrommelofens wird es dabei stetig schwieriger, den Drehtrommelofens gleichmäßig zu beheizen und somit einen gleichmäßigen Schmelzprozess zu ermoglichen. Die Hälfte des Drehtrommelofens, in welcher der Brenner angebracht ist, wird dabei im Allgemeinen stärker erwärmt, als die andere Halfte des Drehtrommelofens.

Diese ungleichmaßige Beheizung des Drehtrommelofens fuhrt zu lokalen Überhitzungen im Drehtrommelofen und somit zu einem ungleichmäßigen Abschmelzen des Metallschrotts Dies wiederum bedeutet eine geringere Produktivität des Drehtrommelofens und erhöhten Betriebskosten.

Aus der EP 0 475 128 A1 ist ein Verfahren zur Verringerung von schädlichen Verbindungen in den Abgasen eines brennerbefeuerten Schmelzofens, insbesondere eines Drehtrommelofens, bekannt Der Drehtrommelofen wird dabei mittels eines Feuerungsbrenners betrieben Dem Drehtrommelofen wird ein sauerstoffreiches Gas derart zugefuhrt, dass ein Bewegungsimpuls von Verbrennungs- und Schweigasen in dem Ofen und ein Bewegungsimpuls des zugeführten sauerstoffreichen Gases nicht gleichsinnig parallel gerichtet sind Das sauerstoffreiche Gas wird dabei insbesondere mittels eines zweiten Brenners, insbesondere eines Sauerstoffbrenners, zugeführt.

Ein zweiter Brenner wird in dem Drehtrommelofen somit lediglich dazu benutzt, um dem Drehtrommelofen ein sauerstoffreiche Gas derart zuzuführen, dass schädliche Verbindungen in den Abgasen verringert werden konnen.

Es ist daher wünschenswert eine Möglichkeit bereitzustellen, einen Drehtrommelofen mit zwei Brennern derart zu betreiben, dass ungleichmäßiges Beheizen des Drehtrommelofens vermieden wird

### Offenbarung der Erfindung

Diese Aufgabe wird durch ein Verfahren zum Betreiben eines Drehtrommelofens sowie einen entsprechenden Drehtrommelofen mit den Merkmalen der unabhängigen Patentansprüche gelöst Der Drehtrommelofen wird dabei mittels eines ersten und eines zweiten Brenners beheizt Der erste Brenner ist in einer Tür des Drehtrommelofens angeordnet und der zweite Brenner ist an einer der Tur gegenüber liegenden Seite des Drehtrommelofens angeordnet. Eine erste Brennerleistung, mit welcher der erste Brenner betrieben wird, und eine zweite Brennerleistung, mit welcher der zweite Brenner betrieben wird, werden in Abhangigkeit voneinander eingestellt.

### Vorteile der Erfindung

Dadurch, dass die erste und zweite Brennerleistung in Abhängigkeit voneinander eingestellt werden, kann der Drehtrommelofen sehr viel variabler beheizt werden als mit nur einem Brenner Beide Brenner werden dabei aktiv gesteuert und die Beiträge der beiden Brenner zur Beheizung des Drehtrommelofens können variabel eingestellt werden. Durch eine derartige aktive, bewusste Einstellung bzw. Steuerung des ersten und zweiten Brenners (bzw. der ersten und zweiten Brennerleistung), kann ein Energieeintrag in den Drehtrommelofen von beiden Seiten des Drehtrommelofens sinnvoll gesteuert werden.

Die erste und die zweite Brennerleistung und somit die jeweiligen Energieeinträge in den Drehtrommelofen können jeweils derart eingestellt werden, dass der Drehtrommelofen gleichmäßig beheizt wird. Die erste und die zweite Brennerleistung werden derart in Abhangigkeit voneinander eingestellt, dass eine optimale Energieverteilung in dem Drehtrommelofen vorliegt Insbesondere können die erste und die zweite Brennerleistung dabei abhängig von den aktuellen Bedingungen und Gegebenheiten in dem Drehtrommelofen eingestellt werden.

Durch die Erfindung wird der Drehtrommelofen gleichmäßig erhitzt Lokale Überhitzungen in dem Drehtrommelofen werden somit vermieden Somit wird es ermöglicht einen gleichmaßigen Schmelzprozess in dem Drehtrommelofen zu betreiben Insbesondere wird dadurch ein gleichmäßiges Abschmelzen von Metallschrott in dem Drehtrommelofen ermöglicht. Die Produktivität bzw. der Wirkungsgrad des Drehtrommelofens kann somit erhöht werden. Betriebskosten, welche durch den Betrieb des Drehtrommelofens bzw des Schmelzprozesses ergeben, können somit verringert werden.

Insbesondere wird, wenn eine der beiden Brennerleistungen erhöht wird, die andere Brennerleistung reduziert Da durch die Tur des Drehtrommelofens Warme leichter entweichen kann (beispielsweise durch Falschlufteintritt durch die Tür), ist im Allgemeinen die Seite des Drehtrommelofens, an welcher die Tür angebracht ist, kälter, als die gegenuberliegende Seite. Insbesondere wird daher die erste Brennerleistung des ersten Brenners, welcher in der Tür angeordnet ist, höher eingestellt als die zweite Brennerleistung

Das erfindungsgemäße Verfahren bietet sich insbesondere für vergleichsweise große Drehtrommelöfen an, welche mit einem einzigen Brenner kaum oder gar nicht gleichmäßig erhitzt werden können Insbesondere bietet sich das erfindungsgemaße Verfahren dabei für Drehtrommelöfen an, welche eine Kapazität von über 20 t Schmelzmaterial und/oder eine innere Länge von 5 m oder darüber, insbesondere 10 m, aufweisen.

Der erste und der zweite Brenner können jeweils beispielsweise als ein Oxyfuel Brenner, ein Airfuel Brenner, ein Sauerstoffbrenner oder ein Sauerstoff-Erdgas-Brenner ausgebildet sein. Die erste und zweite Brennerleistung kann dabei manuell oder automatisch eingestellt werden. Insbesondere werden die erste und zweite Brennerleistung im Zuge einer Regelung eingestellt. Insbesondere werden während des Betriebs des Drehtrommelofens stets beide Brenner betrieben. Die erste und die zweite Brennerleistung sind demgemäß während des Betriebs des Drehtrommelofens stets von Null verschieden.

Vorteilhafterweise wird eine vorgegebene Gesamtleistung für die Beheizung des Drehtrommelofens auf die erste und die zweite Brennerleistung aufgeteilt. Die vorgegebene Gesamtleistung beträgt dabei beispielsweise 3 MW. Die minimale Brennerleistung eines der beiden Brenner beträgt dabei insbesondere mindestens 10% der vorgegebenen Gesamtleistung, weiter insbesondere 15%, weiter insbesondere 20%. Wie weiter oben erwähnt, wird insbesondere die erste Brennerleistung des ersten Brenners, welcher in der Tür angeordnet ist, höher eingestellt als die zweite Brennerleistung. Insbesondere wird die erste Brennerleistung auf 60% der vorgegebenen Gesamtleistung eingestellt und die zweite Brennerleistung auf 40% der vorgegebenen Gesamtleistung.

Die erste und die zweite Brennerleistung müssen aber nicht notwendigerweise auf feste Werte eingestellt werden. Die Anteile der ersten und zweiten Brennerleistung an der vorgegebenen Gesamtleistung werden insbesondere im Zuge einer Regelung flexibel eingestellt. Alternativ oder zusätzlich wird die vorgegebene Gesamtleistung insbesondere zeitlich variabel auf die erste und zweite Brennerleistung aufgeteilt. Die Anteile der ersten und zweiten Brennerleistung an der vorgegebenen Gesamtleistung werden dabei insbesondere nach vorgegebenen Zeitintervallen, beispielsweise 10 Minuten, geändert. Die erste und zweite Brennerleistung können dabei auf fest vorgegebene Erfahrungs- bzw. Messwerte eingestellt werden.

In einer vorteilhaften Ausführung der Erfindung werden die erste und die zweite Brennerleistung in Abhängigkeit von einem Parameter des Drehtrommelofens eingestellt. Insbesondere ist dieser Parameter eine Temperatur. Die erste und die zweite Brennerleistung werden somit insbesondere in Abhängigkeit von der Temperatur in dem Drehtrommelofen eingestellt. Die Temperatur in dem Drehtrommelofen wird dabei beispielsweise mittels wenigstens eines Temperaturfühlers bestimmt.

In einer besonders vorteilhaften Ausführung der Erfindung werden die erste und die zweite Brennerleistung jeweils in Abhängigkeit von einem Parameter in einem von dem jeweiligen Brenner beheizten Teil des Drehtrommelofens eingestellt. Insbesondere ist dieser Parameter eine Teiltemperatur. Die erste und die zweite Brennerleistung werden somit jeweils in Abhängigkeit von der Teiltemperatur in einem von dem jeweiligen Brenner beheizten Teil des Drehtrommelofens eingestellt. Ein erster (bzw. zweiter) Teil oder eine erste (bzw. zweite) Hälfte des Drehtrommelofens ist dabei der Teil bzw. die Halfte des Drehtrommelofens, in welcher der erste (bzw. zweite) Brenner angeordnet ist Ist die erste Teiltemperatur in dem ersten (bzw. zweiten) Teil des Drehtrommelofens geringer als die zweite (bzw. erste) Teiltemperatur in dem zweiten (bzw. ersten) Teil des Drehtrommelofens, wird die erste (bzw zweite) Brennerleistung erhöht und die zweite (bzw erste) Brennerleistung verringert Somit kann die vorgegebene Gesamtleistung auf die erste und zweite Brennerleistung nach dem Warmebedarf der beiden Teile des Drehtrommelofens aufgeteilt werden. Der Energieeintrag in den Drehtrommelofen wird somit bewusst und aktiv auf die beiden Teile des Drehtrommelofens verteilt. Zur Bestimmung der Teiltemperaturen kann beispielsweise in jedem Teil bzw in jeder Halfte des Drehtrommelofens insbesondere wenigstens ein Temperaturfühler angebracht sein. Alternativ oder zusätzlich können auch Temperaturfuhler und/oder Sensoren in einer Abgasöffnung bzw. einer Abgasleitung und/oder in einem Umfeld um den Drehtrommelofen herum angebracht sein, um die Temperatur des Drehtrommelofens und/oder die Teiltemperaturen zu bestimmen Die Temperatur bzw. die Teiltemperaturen können auch von einem Mitarbeiter bestimmt werden.

Vorzugsweise wird bzw werden die erste und/oder die zweite Brennerleistung erhöht, wenn die jeweilige Teiltemperatur in dem jeweiligen Teil des Drehtrommelofens unterhalb einer optimalen Betriebstemperatur liegt Die optimale Betriebstemperatur kann dabei für die beiden Teile des Drehtrommelofens unterschiedlich gewählt werden. Insbesondere wird die optimale Betriebstemperatur jedoch für beide Teile des Drehtrommelofens identisch gewahlt Bevorzugt beträgt die optimale Betriebstemperatur zwischen 1000°C und 1400°C, insbesondere 1200°C. Insbesondere wird die jeweilige Brennerleistung umso stärker erhöht, je weiter die entsprechende Teiltemperatur unterhalb der optimalen Betriebstemperatur liegt. Je weiter folglich die entsprechende Teiltemperatur von der optimalen Temperatur entfernt ist, umso hoher wird der Energieeintrag in den jeweiligen Teil des Drehtrommelofens eingestellt. Je näher die Teiltemperatur sich der optimalen Betriebstemperatur nähert, desto weniger stark wird die entsprechende Brennerleistung erhöht.

Insbesondere wird bzw. werden auf analoge Weise die erste und/oder die zweite Brennerleistung reduziert, wenn die jeweilige Teiltemperatur oberhalb der optimalen Betriebstemperatur (oder eines oberen Grenzwerts der jeweiligen Teiltemperatur) liegt Somit wird gewährleistet, dass die beiden Teile des Drehtrommelofens stets in einem optimalen Temperaturintervall betrieben werden. Insbesondere werden die beiden Teiltemperaturen auf einen vorgegebenen Soll-Wert geregelt, insbesondere auf die optimale Betriebstemperatur selbst.

Bevorzugt werden die erste und die zweite Brennerleistung derart eingestellt, dass sich in dem Drehtrommelofen eine gleichmäßig verteilte Temperatur einstellt Der Drehtrommelofen wird somit gleichmäßig erhitzt und es kommt nicht zu lokalen Überhitzungen in dem Drehtrommelofen Die erste und die zweite Brennerleistung werden derart eingestellt, dass in dem Drehtrommelofen eine gleichmäßige, optimale Energieverteilung vorliegt

In einer bevorzugten Ausführung werden die Brennerleistungen in unterschiedlichen Phasen bzw. Stufen des Schmelzprozesses in dem Drehtrommelofen unterschiedlich eingestellt. Die Brennerleistungen werden somit an die einzelnen Phasen des Schmelzprozesses optimal angepasst eingestellt

Vorzugsweise wird dabei während eines Chargierens, bei dem neues Schmelzmaterial bzw neue Charge in den Drehtrommelofen eingebracht wird, nur der zweite Brenner betrieben Während des Chargierens muss die Tür des Drehtrommelofens geöffnet werden und Falschluft kann durch die geoffnete Tür eintreten. Da wahrend des Chargierens jedoch der zweite Brenner weiterhin betrieben wird, kann vermieden werden, dass sich die Temperatur in dem Drehtrommelofen zu stark verringert. Insbesondere wird die zweite Brennerleistung dabei auf einen höheren Wert eingestellt, als wahrend des regulären Betriebs des Drehtrommelofens.

Nach dem Chargieren ist der erste Teil des Drehtrommelofens in der Nähe der Tür kälter als der zweite Teil des Drehtrommelofens Nach dem Chargieren wird daher der erste Brenner vorzugsweise mit einer hoheren Brennerleistung betrieben als der zweite Brenner Somit wird ein höherer Energieeintrag in den ersten Teil des Drehtrommelofens eingestellt Somit kann sich möglichst schnell wieder eine gleichmäßige Temperaturverteilung in dem Drehtrommelofen einstellen.

In einer Abschwelphase, einer Haltephase und einer Einschmelzphase werden die beiden Brennerleistungen derart eingestellt, dass sich in dem Drehtrommelofen eine für die jeweilige Phase bestmögliche gleichmäßig verteilte Temperatur in dem Drehtrommelofen einstellt

Bevorzugt wird dem ersten und/oder dem zweiten Brenner Sauerstoff mittels einer Sauerstoff-Lanze zugeführt Durch die Zufuhr von Sauerstoff mittels Sauerstoff-Lanzen wird insbesondere ein Abschwelen von Kohlenwasserstoffen unterstützt Insbesondere wird die jeweilige Brennerleistung reduziert, wenn die Zufuhr von Sauerstoff mittels der entsprechenden Sauerstoff-Lanze erhöht wird Die Zufuhr von Sauerstoff wird dabei insbesondere wahrend der Abschwelphase erhöht Insbesondere wird die Zufuhr von Sauerstoff in den unterschiedlichen Phasen des Schmelzprozesses unterschiedlich eingestellt, in Abhängigkeit von der jeweiligen Brennerleistung.

Die Erfindung betrifft weiterhin einen Drehtrommelofen Ausgestaltungen dieses erfindungsgemäßen Drehtrommelofens ergeben sich aus der obigen Beschreibung des erfindungsgemäßen Verfahrens in analoger Art und Weise Ein erfindungsgemäßer Drehtrommelofen umfasst dabei ein Steuergerät, das dazu eingerichtet ist, die erste und zweite Brennerleistung, mit welcher der erste bzw. der zweite Brenner betrieben werden, in Abhängigkeit voneinander gemaß einer Ausfuhrungsform des erfindungsgemäßen Verfahrens einzustellen

Vorteilhafterweise sind der erste und der zweite Brenner derart an gegenüber liegenden Seiten des Drehtrommelofens angeordnet, dass Verwirbelungen von Gasen in dem Drehtrommelofen auftreten Oberhalb der Charge bzw. oberhalb des Schmelzmaterials entsteht somit ein Vortex aus den Gasen und Flammen der beiden Brenner. Diese Verwirbelungen fördern einen Ausbrand von brennbaren Gasen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

- Figur 1: zeigt schematisch eine bevorzugte Ausgestaltung eines erfindungsgemäßen Drehtrommelofens in einer Seitenansicht, der dazu eingerichtet ist, eine bevorzugte Ausführungsform eines erfindungsgemäßen Verfahrens durchzuführen,
- Figur 2: zeigt schematisch eine bevorzugte Ausgestaltung eines erfindungsgemäßen Drehtrommelofens in einer Draufsicht, der dazu eingerichtet ist, eine bevorzugte Ausführungsform eines erfindungsgemäßen Verfahrens durchzuführen

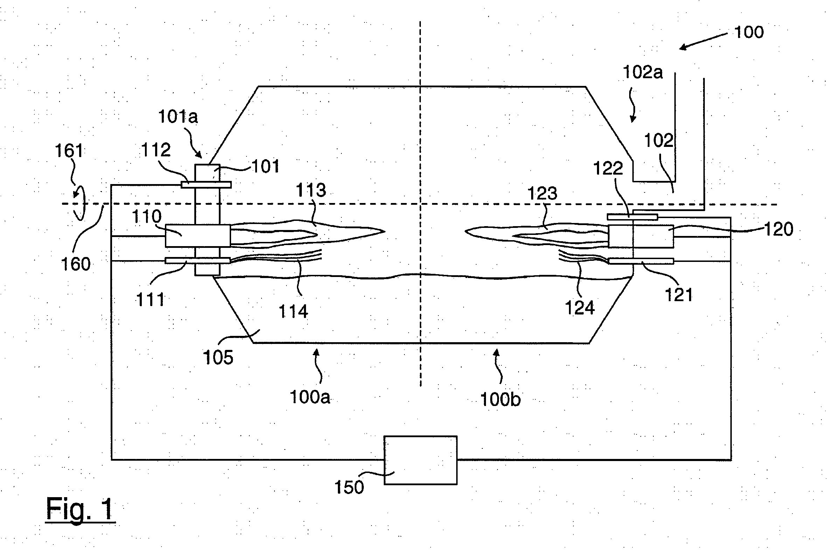

In Figur 1 ist ein erfindungsgemäßer Drehtrommelofen schematisch in einer Seitenansicht dargestellt und mit 100 bezeichnet.

Der Drehtrommelofen 100 weist an einer ersten Seite 101 a eine Tür 101 auf. An einer der Tür gegenüber liegenden zweiten Seite 102a weist der Drehtrommelofen 100 eine Abgasöffnung bzw. einen Abgaskanal 102 auf. In der Tür 101 sind ein erster Brenner 110 und eine erste Sauerstoff-Lanze 111 angeordnet. An der zweiten Seite 102a sind ein zweiter Brenner 120 sowie eine zweite Sauerstoff-Lanze 121 angeordnet. Der Drehtrommelofen 100 kann um eine Drehachse 160 gedreht werden. Diese Drehbewegung bzw. eine Drehrichtung des Drehtrommelofens 100 ist angedeutet durch Bezugszeichen 161.

Wird der erste Brenner 110 betrieben, erzeugt dieser eine erste Flamme 113. Analog erzeugt der zweite Brenner 120 eine zweite Flamme 123 Mittels der Sauerstoff-Lanze 111 bzw 121 kann der ersten bzw. der zweiten Flamme 113 bzw. 123 Sauerstoff zugefuhrt werden, angedeutet durch Bezugszeichen 114 bzw. 124.

Als erster Teil 100a des Drehtrommelofens 100 wird die Hälfte des Drehtrommelofens 100 bezeichnet, in welcher der erste Brenner 110 angeordnet ist Als zweiter Teil 100b des Drehtrommelofens 100 wird die Halfte des Drehtrommelofens 100 bezeichnet, in welcher der zweite Brenner 110 angeordnet ist In dem ersten Teil 1 00a des Drehtrommelofens 100 ist ein erster Temperaturfühler 112 angebracht Der erste Temperaturfühler 112 ist dabei insbesondere in der Tur 101 angeordnet Analog ist in dem zweiten Teil 100b des Drehtrommelofens 100 ein zweiter Temperaturfühler 122 angebracht. Der zweite Temperaturfühler 122 ist dabei in der der Tür gegenuber liegenden zweiten Seite 102a angeordnet. Alternativ können die erste und die zweite Teiltemperatur auch durch einen Mitarbeiter visuell bestimmt werden.

Mittels der Tür 101 kann eine Charge bzw Schmelzmaterial 105, beispielsweise Metallschrott, in den Drehtrommelofen 100 eingebracht werden Die Charge 105 wird in einem Schmelzprozess in dem Drehtrommelofen 100 eingeschmolzen.

Ein Steuergerät 150 ist dazu eingerichtet ist, eine bevorzugte Ausführungsform eines erfindungsgemäßen Verfahrens zum Betreiben des Drehtrommelofens 100 durchzufuhren Das Steuergerat 150 steuert dazu den ersten und zweiten Brenner 110 bzw. 120 an (schematisch dargestellt) und stellt eine erste und zweite Brennerleistung in Abhängigkeit voneinander ein, mit welcher der erste bzw. der zweite Brenner 110 bzw. 120 betrieben werden

Das Steuergerät 150 stellt die erste bzw. zweite Brennerleistung dabei in Abhängigkeit von einer ersten bzw. einer zweiten Teiltemperatur in dem ersten bzw. zweiten Teil 100a bzw. 100b des Drehtrommelofens 100 ein. Das Steuergerat 150 bestimmt dazu die erste Teiltemperatur in dem ersten Teil 100a mittels des ersten Temperaturfühlers 112 als einen ersten Parameter. Analog bestimmt das Steuergerät 150 die zweite Teiltemperatur in dem zweiten Teil 100b mittels des zweiten Temperaturfuhlers 122 als einen zweiten Parameter. Das Steuergerat verteilt eine vorgegebene Gesamtleistung, beispielsweise 3 MW, auf die erste und zweite Brennerleistung, in Abhängigkeit von dem ersten und zweiten Parameter, also in Abhangigkeit von der ersten und zweiten Teiltemperatur

Ist beispielsweise die erste Teiltemperatur geringer als die zweite Teiltemperatur, erhöht das Steuergerät die erste Brennerleistung und verringert die zweite Brennerleistung. Somit wird gewährleistet, dass die Temperatur in dem gesamten Drehtrommelofen 100 gleichmäßig verteilt ist Somit kann ein gleichmäßiger Schmelzprozess der Charge 105 ermöglicht werden Ein Energieeintrag in den Drehtrommelofen 100 kann somit flexibel und variabel auf die beiden Teile 100a und 100b des Drehtrommelofens 100 verteilt werden

Insbesondere kann das Steuergerat eine optimale Betriebstemperatur von insbesondere 1200°C in dem gesamten Drehtrommelofen 100 einstellen. Unterschreitet eine der Teiltemperaturen diese optimale Betriebstemperatur, wird die jeweilige Brennerleistung erhöht. Uberschreitet eine der Teiltemperaturen diese optimale Betriebstemperatur, wird die jeweilige Brennerleistung verringert.

Das Steuergerät 150 steuert weiterhin die erste und zweite Sauerstoff-Lanze 111 bzw. 121 an Insbesondere wird die jeweilige Sauerstoff-Lanze 111 bzw. 121 in Abhängigkeit der Brennerleistung des entsprechenden Brenners 110 bzw. 120 angesteuert Das Steuergerat 150 stellt somit die Zufuhr von Sauerstoff 114 bzw. 124 ein.

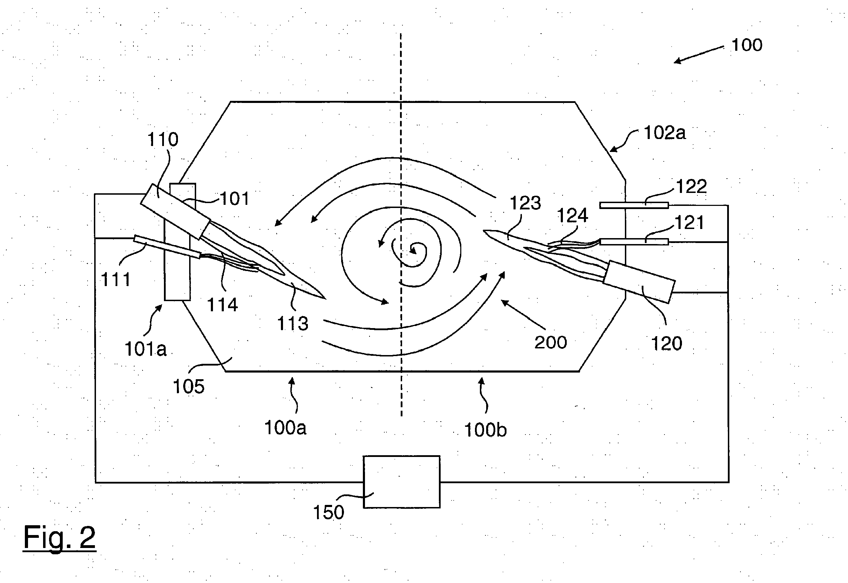

In Figur 2 ist der Drehtrommelofen 100 aus Figur 1 schematisch in einer Draufsicht dargestellt Identische Bezugszeichen in den Figuren 1 und 2 bezeichnen dabei identische bzw. baugleiche Elemente. Der Ubersichtlichkeit halber sind nicht samtliche Elemente des Drehtrommelofens aus Figur 1 auch in Figur 2 dargestellt

Durch die Draufsicht des Drehtrommelofens 100 in Figur 2 wird eine bevorzugte Anordnung des ersten und des zweiten Brenners 110 bzw. 120 an den Seiten 101 a bzw. 102a des Drehtrommelofens 100 verdeutlicht Der erste und der zweite Brenner 110 und 120 sind dabei derart an den Seiten 101 a bzw. 102a angeordnet, dass Verwirbelungen 200 von Gasen in dem Drehtrommelofen auftreten. Hierbei sind die Brennerachsen derart ausgerichtet, dass diese Achsen nicht in einer, zur Zeichenebene senkrechten Ebene liegen, sondern in zwei Ebenen, die vorzugsweise im Wesentlichen parallel zueinander verlaufen.

Durch einen Impuls bzw. eine Impulsstromdichte, mit welcher die Flammen 113 und 114 bzw die in den Flammen 113 und 114 verbrannten Gase die Brenner 110 und 120 verlassen, werden die Gase in dem Drehtrommelofen 100 von dem Brenner 110 in Bewegung versetzt. Durch die entsprechende Anordnung des ersten und des zweiten Brenners 110 und 120 zueinander, bewegen sich die Gase in dem Drehtrommelofen 100 in entgegengesetzte Richtungen. Somit entstehen die Verwirbelungen 200 der Gase und der Flammen 113 und 123.

### Bezugszeichenliste

- 100: Drehtrommelofen

- 100a: erster Teil des Drehtrommelofens
- 100b: zweiter Teil des Drehtrommelofens

- 101: Tür
- 101a: erste Seite des Drehtrommelofens

- 102: Abgaskanal
- 102a: zweite Seite des Drehtrommelofens
- 105: Charge, Schmelzmaterial

- 110: erster Brenner
- 111: erste Sauerstoff-Lanze
- 112: erster Temperaturfühler
- 113: erste Flamme
- 114: erste Sauerstoffzufuhr

- 120: zweiter Brenner
- 121: zweite Sauerstoff-Lanze
- 122: zweiter Temperaturfühler
- 123: zweite Flamme
- 124: zweite Sauerstoffzufuhr

- 150: Steuergerät

- 160: Drehachse
- 161: Drehrichtung

- 200: Verwirbelungen

## Patentansprüche

1. Verfahren zum Betreiben eines Drehtrommelofens (100),
- wobei der Drehtrommelofen (100) mittels eines ersten (110) und eines zweiten (120) Brenners beheizt wird,
- wobei der erste Brenner (110) in einer Tür (101) des Drehtrommelofens (100) angeordnet ist und der zweite Brenner (120) an einer der Tür (101) gegenüber liegenden Seite (102a) des Drehtrommelofens (100) angeordnet ist,
**dadurch gekennzeichnet, dass**
- eine erste Brennerleistung und eine zweite Brennerleistung, mit welcher der erste (110) bzw. der zweite (120) Brenner betrieben werden, in Abhängigkeit voneinander eingestellt werden.

2. Verfahren nach Anspruch 1, wobei eine vorgegebene Gesamtleistung für die Beheizung des Drehtrommelofens (100) auf die erste und die zweite Brennerleistung insbesondere zeitlich variabel aufgeteilt wird.

3. Verfahren nach Anspruch 1 oder 2, wobei die erste und die zweite Brennerleistung in Abhängigkeit von einem Parameter in dem Drehtrommelofen (100), insbesondere in Abhängigkeit von einer Temperatur in dem Drehtrommelofen (100), eingestellt werden.

4. Verfahren nach einem der vorstehenden Ansprüche, wobei die erste und die zweite Brennerleistung jeweils in Abhängigkeit von einem Parameter in einem von dem jeweiligen Brenner (110, 120) beheizten Teil (100a, 100b) des Drehtrommelofens (100), insbesondere in Abhängigkeit von einer Teiltemperatur in einem von dem jeweiligen Brenner (110, 120) beheizten Teil (100a, 100b) des Drehtrommelofens (100), eingestellt werden.

5. Verfahren nach Anspruch 4, wobei die erste und/oder die zweite Brennerleistung erhöht wird/werden, wenn die jeweilige Teiltemperatur in dem jeweiligen Teil (100a, 100b) des Drehtrommelofens (100) unterhalb einer optimalen Betriebstemperatur liegt.

6. Verfahren nach Anspruch 5, wobei die optimale Betriebstemperatur zwischen 1000°C und 1400°C, insbesondere 1200°C beträgt.

7. Verfahren nach einem der vorstehenden Ansprüche, wobei die erste und die zweite Brennerleistung derart eingestellt werden, dass sich in dem Drehtrommelofen (100) eine gleichmäßig verteilte Temperatur einstellt.

8. Verfahren nach einem der vorstehenden Ansprüche, wobei die erste und die zweite Brennerleistungen in unterschiedlichen Phasen eines Schmelzprozesses in dem Drehtrommelofen (100) unterschiedlich eingestellt werden.

9. Verfahren nach einem Anspruch 8, wobei während eines Chargierens, bei dem neues Schmelzmaterial (105) in den Drehtrommelofen eingebracht wird, nur der zweite Brenner (120) betrieben wird.

10. Verfahren nach Anspruch 8 oder 9, wobei nach dem Chargieren der erste Brenner (110) mit einer höheren Brennerleistung betrieben wird als der zweite Brenner (120).

11. Verfahren nach einem der vorstehenden Ansprüche, wobei dem ersten (110) und/oder dem zweiten (120) Brenner mittels einer Sauerstoff-Lanze (111, 121) Sauerstoff zugeführt wird (114, 124).

12. Drehtrommelofen (100), aufweisend einen ersten (110) und einen zweiten (120) Brenner zum Beheizen des Drehtrommelofens (100), wobei der erste Brenner (110) in einer Tür (101) des Drehtrommelofens (100) angeordnet ist und der zweite Brenner (120) an einer der Tür (101) gegenüber liegenden Seite (102a) des Drehtrommelofens (100) angeordnet ist,
**dadurch gekennzeichnet, dass**
der Drehtrommelofen (100) ein Steuergerät (150) umfasst, das dazu eingerichtet ist, eine erste Brennerleistung und eine zweite Brennerleistung, mit welcher der erste (110) bzw. der zweite (120) Brenner betrieben werden, in Abhängigkeit voneinander gemäß einem Verfahren der vorstehenden Ansprüche einzustellen.

13. Drehtrommelofen nach Anspruch 12, wobei der erste (110) und der zweite (120) Brenner derart an gegenüber liegenden Seiten (101a, 102b) des Drehtrommelofens (100) angeordnet sind, dass Verwirbelungen (200) von Gasen in dem Drehtrommelofen (100) auftreten.
